# EUROPÄISCHE PATENTSCHRIFT

(11) **EP 1 906 655 B1**
(45) Veröffentlichungstag und Bekanntmachung des Hinweises auf die Patenterteilung: **13.07.2011**
(21) Anmeldenummer: 07018860.2
(22) Anmeldetag: 25.09.2007
(51) Int. Cl.: H04N 5/225, H04N 5/262, G01C 9/00

(54) **Verfahren zur Korrektur perspektivischer Verzerrungen eines Linsensystems**
Method for correcting distortions in perspective of a lens system
Procédé de correction de déformations de perspective d'un système de lentilles

(30) Priorität: 26.09.2006 DE 202006014883 U
(43) Veröffentlichungstag der Anmeldung: 02.04.2008
(73) Patentinhaber: Grosspietsch, Detlef, 51519 Odenthal (DE)
(72) Erfinder: Detlef, Grosspietsch, 51519 Odenthal (DE)
(74) Vertreter: Nuxoll, Katja

(56) Entgegenhaltungen:
- US-A1- 2002 075 389
- US-A1- 2002 118 292
- US-A1- 2003 164 880
- US-A1- 2006 078 215
- US-A1- 2006 082 657

## Beschreibung

Die vorliegende Erfindung betrifft ein Verfahren zur Korrektur perspektivischer Verzerrungen eines Linsensystems , bei dem Bilddaten, die ein durch das Linsensystem projiziertes Bild beschreiben, mit Korrekturdaten korrigiert und die so korrigierten Bilddaten zur Anzeige eines korrigierten Bildes ausgegeben werden.

Ein solches Verfahren ist beispielsweise aus der EP 1 295 469 bekannt, die eine Digitalkamera oder eine Videokamera mit einem Objektiv, einem Sensor zur Erfassung und Digitalisierung der gesamten durch das Objektiv abgebildeten und in einem Bildkreis enthaltenen Bildinformation umfasst sowie Mittel zum Speichern der digitalisierten Bildinformation. Des weiteren hat die Digitalkamera einen Schrägstellungssensor. Der Sensor zur Erfassung und Digitalisierung der gesamten durch das Objektiv abgebildeten und in einem Bildkreis enthaltenen Information ist drehbar gelagert und entsprechend der durch den Schrägstellungssensor gemessenen Schrägstellung an der Horizontalen ausrichtbar. Bei einem alternativen Lösungsvorschlag ist die Bildinformation entsprechend der durch den Schrägstellungssensor gemessenen Schrägstellung in die Horizontale drehbar.

Der vorbekannte Lösungsvorschlag offenbart dementsprechend nichts anderes als eine digitalisierte Fachkamera. Bei solchen Fachkameras, die als konventionelle Fachkamera seit jeher bekannt sind, wird dem Problem einer perspektivischen Verzerrung mit Fach-, Shift- oder Tiltobjektiven begegnet, welche eine gewisse Korrektur perspektivischer Verzerrungen ermöglichen. Allerdings ist der Aufbau der Fachkameras aufwendig, so dass diese kostspielig sind. Darüber hinaus bedarf es erheblicher Erfahrung, um perspektivische Verzerrungen durch angemessene Verstellung der Fachkamera zu kompensieren.

Der vorerwähnte gattungsbildende Stand der Technik begegnet diesem Problem dadurch, dass die durch Schrägstellung der Kamera verursachte optische Verzerrung durch den Schrägstellungssensor erfasst und der Sensor zur Erfassung und Digitalisierung der Bildinformation zur Korrektur perspektivischer Fehler in seiner Ausrichtung in der Kamera verändert wird. Mit anderen Worten nutzt der Lösungsvorschlag nach der EP 1 295 469 den bei herkömmlichen (analogen) Kameras hinlänglich bekannten Ansatz, optische Verzerrungen durch Relativbewegung zwischen der Objektivebene und der Abbildungsebene zu kompensieren.

Der Lösungsvorschlag nach diesem Stand der Technik erfordert aber eine spezielle Kamera, die mit einem gesonderten Antrieb zur Verstellung des Sensors zur Erfassung der Bildinformation versehen ist. Die Kamera ist danach aufwendig in der Herstellung und auf Grund der mechanischen Bauteile relativ störungsanfällig. Das Dokument US2006/0078215 offenbart ein Korrekturverfahren mittels einer linearen Transformation. Der vorliegenden Erfindung liegt das Problem zu Grunde, ein Verfahren zur Korrektur von perspektivischen Verzerrungen eines Linsensystems anzugeben, welches bei geringem apparativem Aufwand seitens der Kamera zuverlässig durchgeführt werden kann und welches auf Seiten des Fotografen keine besonderen Kenntnisse erfordert. Das Verfahren soll sich mit herkömmlichen digitalen Kameras leicht durchführen lassen.

Zur Lösung des obigen Problems wird mit der vorliegenden Erfindung ein Verfahren mit den Merkmalen von Anspruch 1 vorgeschlagen.

Bevorzugte Weiterbildungen sind in den abhängigen Ansprüchen angegeben.

Bei dem erfindungsgemäßen Verfahren wird die Winkellage des Linsensystems beim Erzeugen der Bilddaten erfasst, und zwar in Form von Winkellagedaten. Diese Winkellagedaten werden aus der Kamera ausgelesen, und zwar entweder direkt oder nach Zwischenspeichern auf einem Speichermedium in der Kamera. Diese kann beispielweise verschiedene Speicher aufweisen, um einerseits die von dem Sensor zur Erfassung der Bildinformationen erfassten Bilddaten abzuspeichern, wohingegen ein gesonderter Speicher die Winkellagedaten erfasst. Zu beiden Datensätzen wird vorzugsweise eine Zeitinformation hinterlegt, sodass durch Abgleich der Zeitinformation die beiden Datensätze beim Auslesen aus der Kamera oder zu einem späteren Zeitpunkt einander zugeordnet werden können. Dem Bilddatensatz ist jedenfalls immer ein Winkellagedatensatz zugeordnet oder zuordbar. Anhand dieser Daten erfolgt die Korrektur optischer Verzerrungen. Dabei wird gemäß der vorliegenden Erfindung auf eine Datenbank zugegriffen, in welcher Winkellagekorrekturdaten hinterlegt sind. Die Datenbank enthält eine Vielzahl von Korrekturdaten zu unterschiedlichen Winkellagen. Anhand der einem speziellem Bild, d.h. einem Satz Bilddaten zugeordneten Winkellagedaten, werden aus der Datenbank die zu der Winkellage beim Abbilden der Bilddaten passenden Winkellagekorrekturdaten ausgewählt und aus dieser ausgelesen. Der Datenbank ist vorzugsweise unmittelbar ein Zentralrechner zugeordnet, welcher auf Grund der Winkellagekorrekturdaten die Bilddaten umgerechnet und somit die optische Verzerrung korrigiert. Diese Korrektur erfolgt üblicherweise über eine Pixel-Zu-Pixel-Korrektur. Dabei können Verfahren zum Einsatz kommen, mit denen sich die Rechnerleistung verringem lässt. So können beispielsweise optische Symmetrieachsen genutzt werden, um errechnete Korrekturdaten zu spiegeln. Die in dem Zentralrechner ermittelten korrigierten Bilddaten werden schließlich ausgegeben, um ein korrigiertes Abbild des abgebildeten Gegenstandes anzuzeigen. Diese Anzeige kann an einem Bildschirm erfolgen oder aber durch Ausdruck der korrigierten Bilddaten auf einem Träger, beispielsweise Fotopapier.

Mit der vorliegenden Erfindung müssen herkömmliche Digitalkameras lediglich mit Sensoren zur Bestimmung der Winkellage ausgerüstet oder nachgerüstet werden. Solche Sensoren können beispielsweise durch eine Libelle, insbesondere eine elektronische Libelle gebildet sein, die die Schrägstellung der Kamera relativ zur Horizontalen anzeigt.

Als "elektronische Libelle" soll jeder Sensor verstanden werden, der aufgrund der Schwerkraft der Erde eine Schrägstellung eines mit der elektronischen Libelle verbundenen Gegenstandes relativ zu der Kraftwirkungslinie der Schwerkraft der Erde anzeigen kann.

Ebenso gut können Beschleunigungssensoren an der Kamera vorgesehen sein, die die Schrägstellung der Kamera erfassen. Auch können verschiedene Sensoren miteinander kombiniert und in der Kamera eingebaut oder an der Kamera angebaut sein.

Bei einer Schrägstellung der optischen Achse relativ zu der horizontalen Ebene wird man insbesondere eine elektronische Libelle zum Einsatz bringen. Entsprechendes gilt für die Schrägstellung relativ zu der Horizontalen und um eine Achse, die sich rechtwinklig zu der optischen Achse des optischen Systems erstreckt.

Vorzugsweise erfolgt mit dem erfindungsgemäßen Verfahren auch eine Entzerrung von perspektivischen Fehlern, die sich dadurch ergeben, dass das optische System um eine vertikale Achse verschwenkt wird. Zur Korrektur solcher Verzerrungen wird vorzugsweise das optische System zunächst mit seiner optischen Achse rechtwinklig zu einer ebenen Fläche eines abzubildenden Objektes angeordnet und kalibriert. Die zum Überführen des optischen Systems von dieser Kalibrierposition in die Position, die beim Erzeugen des Abbildes, d.h. der Bilddaten von dem optischen System eingenommen wird, vollzogene Drehung desselben um die Vertikale wird durch wenigstens einen an dem optischen System angebrachten Sensor ermittelt, der üblicherweise ein Beschleunigungssensor ist. Bei dieser Weiterbildung muss der Benutzer des optischen Systems dementsprechend zunächst der Kamera anzeigen, dass die Kalibrierposition eingenommen ist. Nach einem entsprechenden Signal wird das optische System vorzugsweise das Betätigen des Auslösers, d.h. die Erfassung von Bilddaten unmittelbar nach dem Kalibrieren als Hinweis aufnehmen, die zwischen dem Kalibrieren und dem Auslösen erfolgte Drehung um die Vertikale, die von dem wenigstens einen Sensor gemessen wurde, als Winkellageinformation zu der entsprechenden Drehung um die Vertikale abzuspeichem.

Bei dem erfindungsgemäßen Verfahren wird auf eine Datenbank zurückgegriffen, in welcher Winkellagekorrekturdaten hinterlegt sind. Bei diesen Winkellagekorrekturdaten handelt es sich insbesondere um Korrekturdaten, die aufgrund eines Vergleichs von bildgebenden Daten eines Testcharts mit Korrekturbilddaten erzeugt sind, die durch Abbilden des Testcharts mit winkelmäßigem Versatz gegenüber einer zentralperspektivischen Achslage relativ zu dem Testchart erzeugt worden sind. Mit anderen Worten sind die Winkellagekorrekturdaten ermittelt worden durch Ablichten eines Testcharts über ein bildgebendes System bei einem winkelmäßigen Versatz der optischen Achse des bildgebenden Systems relativ zu der zentralperspektivischen Achse auf das Testchart und Vergleich der so gewonnenen Bilddaten des Abbildes mit den bildgebenden Daten zur Erzeugung des Testcharts. Die Datenbank hat vorzugsweise zu sämtlichen denkbaren winkelmäßigen Abweichungen von der zentralperspektivischen Achslage erzeugte Sätze von Winkellagekorrekturdaten. Vorzugsweise ist zu jeder denkbaren Ausrichtung eines Aufnahmesystems, beispielsweise einer digitalen Kamera relativ zu der Vertikalen bzw. Horizontalen am Aufnahmeort in dem Speicher ein entsprechender Satz von Winkellagekorrekturdaten hinterlegt. Weiterhin bevorzugt kommen diese Datensätze für verschiedene Objektive und/oder optische Systeme (z.B. Kameras) durch Messen ermittelt und in der Datenbank hinterlegt sein. Es ist dabei denkbar die beiden, vorerwähnten lagemäßigen Abweichungen, d.h. die Abweichung der optischen Achse der Kamera von der horizontalen Ebene und die Abweichung zwischen dem Kamerahorizont und dem echten Horizont jeweils für sich in der Datenbank zu hinterlegen oder aber Sätze zu Winkellagekorrekturdaten zu hinterlegen, welche die Überlagerung der beiden Abweichungen bereits berücksichtigen.

Zur Durchführung des erfindungsgemäßen Verfahrens kommt vorzugsweise ein Prozessor zum Einsatz, der mit dem Speicher, der die Bilddaten speichert, und der Datenbank verbindbar ist, um einerseits die Bilddaten sowie die Winkellagedaten aus dem Speicher und andererseits die Winkellagekorrekturdaten aus der Datenbank auszulesen. Dabei ist der Prozessor derart vorbereitet, dass er zunächst vorzugsweise anhand der konkreten Winkellagedaten zu dem optisch verzerrten Abbild aus der Datenbank, bestimmte Winkellagekorrekturdaten ausliest, die zu einer winkelmäßigen Lageabweichung hinterlegt sind, welche der beim Erzeugen des Abbildes vorhandenen winkelmäßigen Abweichung am nächsten kommen. Lediglich mit diesen bestimmten Winkellagekorrekturdaten, d.h. dem bestimmten Satz von Winkellagekorrekturdaten aus der Datenbank auszulesen und mit diesen eine mathematische Korrektur der Bilddaten durchgeführt. Vorzugsweise wird der durch die ermittelten Winkellagedaten bestimmbare Satz an Winkellagekorrekturdaten durch den Prozessor automatisiert ausgewählt, jedenfalls dann, wenn mit dem erfindungsgemäßen Aufnahmesystem lediglich eine automatisierte, bestmögliche Korrektur perspektivischer Verzerrungen erreicht werden soll. Allerdings ist es insbesondere im Bereich der Profifotografie denkbar, dass anhand von Winkellagekorrekturdaten bestimmte perspektivische Verzerrungseffekte betont und künstlerisch herausgehoben werden sollen. In diesem Fall kann der gewünschte Satz an Winkellagekorrekturdaten auch individuell bestimmt und ausgelesen werden.

Der geeignete Satz an Winkellagekorrekturdaten wird zur Umrechnung der im Speicher hinterlegten Bilddaten genutzt, um korrigierte Bilddaten zu berechnen. Diese korrigierten Bilddaten werden zur Erzeugung eines hinsichtlich seiner perspektivischen Verzerrung veränderten Abbildes genutzt. Üblicherweise bedeutet dies, dass das veränderte Abbild keine oder keine nennenswerte perspektivische Verzerrung aufweist. In diesem Fall können zu sehr unterschiedlichen Winkellagen der Kamera beim Erzeugen des Abbildes automatisch korrigierte Bilddaten erzeugt werden.

Es hat sich als vorteilhaft herausgestellt, Sätze von Winkellagekorrekturdaten in der Datenbank zu hinterlegen, die einen winkelmäßigen Versatz von nicht mehr als zwei Grad, vorzugsweise von nicht mehr als einem Grad relativ zueinander aufweisen. Mit dieser Maßgabe ist in der Datenbank ein relativ enges Raster mit Winkelschritten von einem Grad bzw. zwei Grad hinterlegt, welches eine sehr genaue Korrektur perspektivischer Verzerrung bei sämtlichen denkbaren Lageabweichungen der Kamera bezüglich eines die Vertikale und Horizontale enthaltenden Koordinatensystems ermöglicht. Bei dem erfindungsgemäßen Verfahren erfolgt zumindest eine Korrektur optischer Verzerrungen in einer Ebene, d.h. eine Entzerrung für optische Verzerrungen die sich dadurch ergeben, dass die Kamera mit ihrer optischen Achse bzw. einer sich hierzu rechtwinklig erstreckenden und bei lotrechter Ausrichtung der Kamera in der horizontalen verlaufenden Achse verschwenkt wird. Solche Winkellagen können mit den elektronischen Libellen erfasst werden.

Vorzugsweise erfolgt eine Entzerrung in zwei Ebenen, wobei zusätzlich zu den vorerwähnten Schwenkbewegungen der Kamera auch die Verschwenkbewegung um die vertikale Achse zur Korrektur optischer Verzerrungen ermittelt wird. Für die Entzerrung in zwei Ebenen werden gemäß einer bevorzugten Weiterbildung der vorliegenden Erfindung die Winkellagekorrekturdaten aus einer Datenbank ausgelesen, in der denkbare Winkellagen des optischen Systems beim Erzeugen eines Abbildes um drei Achsen eines kartesischen Koordinatensystems jeweils in Intervallen hinterlegt sind, die vorzugsweise zu jeder der drei Achsen eine identische Intervallbreite haben, die vorzugsweise zwischen 0,5 und 2° beträgt.

Gemäß einer bevorzugten Ausgestaltung der vorliegenden Erfindung hat das Aufnahmesystem eine Korrekturmöglichkeit zur Korrektur von optischen Verzerrungen des Linsensystems. Zu diesen optischen Fehlern gehören insbesondere die Vignettierung sowie die Distorsion, d.h. die Abschattung des Abbildes zum Bildrand hin und die linsenbedingte Krümmung an sich gerader Linien, die im fotografischen Abbild beispielsweise tonnen- oder kissenförmig erscheinen. Dementsprechend werden beim Erzeugen des Abbildes neben den Winkellagedaten auch Daten zu dem beim Erzeugen des Abbildes verwendeten Objektiv gespeichert. In der Datenbank sind vorzugsweise zu eine Vielzahl von verschiedenen Objektiven die optischen Fehler hinterlegt.

Dementsprechend sind in der Datenbank linsenspezifische Korrekturdaten enthalten und der zur Durchführung des Verfahrens vorgesehene Prozessor ist derart vorbereitet, dass die Bilddaten zunächst zur Erzeugung von optisch korrigierten Bilddaten, welche um optische Fehler des Linsensystems bereinigt sind, umgerechnet und diese optisch korrigierten Bilddaten nachfolgend in die vorerwähnten perpektivisch korrigierten Bilddaten umgerechnet werden. Mit anderen Worten wird zunächst aufgrund von Korrekturdaten in der Datenbank, z.B. die Distorsion herausgerechnet und nachfolgend die optische Verzerrung. Die optisch korrigierten Bilddaten geben dabei weiterhin ein perspektivisch verzerrtes Bild an, sind aber um Linsenfehler, insbesondere um die Distorsion bereinigt. Die aufgrund dieser optisch korrigierten Bilddaten berechneten perspektivisch korrigierten Bilddaten sind sowohl hinsichtlich der optischen Fehler des Linsensystems wie auch hinsichtlich der perspektivischen Verzerrung korrigiert. Das mit den korrigierten Bilddaten erzeugbare Abbild zeigt keine Artefakte. Ein Verfahren zur Korrektur der Distorsion, welches im Rahmen der vorliegenden Erfindung zur Anwendung kommen kann, ist beispielsweise aus der DE 101 26 546 bekannt.

Zur Verminderung der Rechnerleistung bei dem Betreiber der Datenbank wird gemäß einer bevorzugten Weiterbildung der vorliegenden Erfindung vorgeschlagen, dass nach Übertragung der Winkellagedaten sowie von Daten, die dem optischen System zugeordnet sind und beispielsweise das verwendete Objektiv, das Aufnahmeformat, die Brennweite und/oder die Blende bei der Aufnahme identifizieren bzw. wiedergeben, die aus der Datenbank ermittelten Winkellagekorrekturdaten ausgelesen und an den Versender übermittelt werden, so dass die Korrektur der Bilddaten bei dem Versender erfolgen kann.

Die Datenbank kann auch genutzt werden, um nach individuellen Wünschen eines Users Winkelkorrekturdaten auszulesen, anhand derer der Benutzer beliebige gewünschte Bilddaten korrigieren bzw. verändern kann, um besondere perspektivische Effekte zu erzielen. Mit anderen Worten können die tatsächlichen Korrekturdaten genutzt werden, um gestalterisch Einfluss auf die Perspektive zu nehmen. Diese Einflussnahme erfolgt über die Abbildungsebene nach Art einer "Virtuellen-Standarte".

Zur Verdeutlichung der vorliegenden Erfindung und deren Wirkung wird nachfolgend ein Ausführungsbeispiel in Verbindung mit der Zeichnung diskutiert. In dieser zeigen:
- Fig. 1: eine schematische Darstellung einer Kamera und deren Anordnung relativ zu ei- nem rechteckigen, senkrecht stehenden Objekt;
- Fig. 2/2a: das Abbild einer mit Testcharts versehenen Anordnung von zwei aufrecht auf ei- ner Ebene stehenden, winklig zueinander angeordneten Objekten bei einer per- spektivischen Veränderung der Kamera 1 in einer Ebene ohne die erfindungsge- mäße Korrektur;
- Fig. 3/3a: die in Fig. 2/2a gezeigte Darstellung nach Korrektur mit dem erfindungsgemäßen Korrekturverfahren;
- Fig. 4/4a: das Abbild einer mit Testcharts versehenen Anordnung von zwei aufrecht auf ei- ner Ebene stehenden, winkelig zueinander angeordneten Objekten bei einer per- spektivischen Veränderung der Kamera 1 in zwei Ebenen ohne die erfindungs- gemäße Korrektur;
- Fig. 5/5a: die in Fig. 4/4a gezeigte Darstellung nach Korrektur mit dem erfindungsgemäßen Korrekturverfahren; und
- Fig. 6: ein schematisches Ablaufdiagramm zur Verdeutlichung des erfindungsgemäßen Verfahrens.

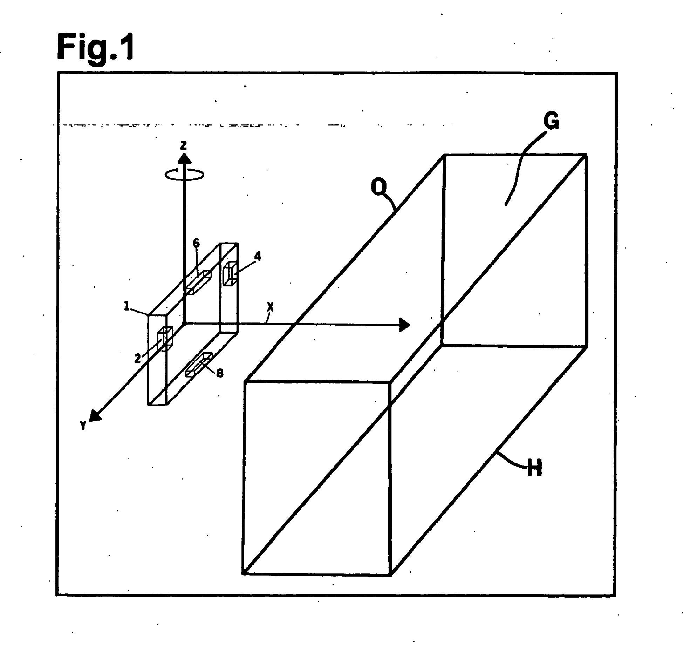

In Fig. 1 ist schematisch eine Kamera 1 mit mehreren Winkellagesensoren 2, 4, 6, 8 gezeigt. Die diametral zu der optischen Achse X einander gegenüberliegenden Winkelsensoren 2, 4 bzw. 6,₋8 bilden jeweils ein Winkelsensorenpaar, welches eine Einheit bildet, um die jeweilige winkelmäßige Lageabweichung der Kamera 1 zu ermitteln. Bei einer Drehung der Kamera 1 um die optische Achse X ergibt sich eine winkelmäßige Verlagerung zwischen dem tatsächlichen Horizont H und dem Horizont der Kamera. Mit anderen Worten ist eine Oberkante 0 eines in Fig. 1 schematisch gezeigten Gebäudes G nicht mehr parallel mit der Ober- und Unterseite der Bildebene der Kamera. Die Winkelsensoren 2, 4 gleichen ihre jeweiligen Messsignale jeweils ab. Sofern diese identisch sind, ergibt sich, dass die Kamera innerhalb der horizontalen Geraden ist, d.h. die Ober- und die Unterseite der Kamera 2 planparallel zu dem tatsächlichen Horizont H verläuft. Bei einer Drehung um die optische Achse X liegen die beiden Sensoren 2, 4 nicht mehr auf einer Höhe. Aus den Abweichungen der beiden Messsignale der Sensoren 2, 4 zueinander kann die winkelmäßige Anstellung der Kamera relativ zu der Horizontalen H berechnet werden (horizontale Fehllage).

Bei einer Verschwenkbewegung um die Y-Achse wird die Kamera aus der in Fig. 1 gezeigten lotrechten Ausrichtung der Bildebene, d.h. der Ausrichtung der Bildebene in der Y-Z-Ebene verschwenkt. Die optische Achse X verläuft dann nicht mehr parallel zur horizontalen Ebene H. Die beiden auf Höhe der optischen Achse X angeordneten Sensoren 2, 4 werden durch diese Verschwenkbewegung hinsichtlich ihres Ausgangssignals nicht verändert. Wohl aber wird die Lage der Winkelsensoren 6, 8 relativ zueinander verändert. Diese sind bei einer lotrechten Ausrichtung der Bildebene (vgl. Fig. 1) exakt übereinander vorgesehen. Beim Verschwenken der Kamera 1 um die Y-Achse ergibt sich aufgrund der Sensoren 6, 8 ein Signal, welches als winkelmäßige Anstellung der optischen Achse X relativ zur Horizontalen H umgerechnet werden kann.

Bei einer Schwenkbewegung um die Z-Achse bleiben die von den Sensoren 2 bis 4 abgegebenen Signale unverändert. Eine solche Verschwenkbewegung wirkt sich auf die perspektivische Darstellung aus, die ebenfalls zu einer Verzerrung führen kann und durch Kalibrieren der Kamera korrigiert werden kann. Hierzu wird die Kamera parallel zu der Forderseite des G, weiches in Figur 1 schematisch dargestellt ist. Mit anderen Worten wird diejenige Stellung der Kamera 1 relativ zu dem Gebäude G eingenommen, die in Figur 1 schematisch dargestellt ist. Danach bedient der Benutzer einen Signalgeber, der der Kamera das Kalibrieren anzeigt. Sofern der Benutzer nunmehr das Gebäude schräg aufnehmen möchte, d.h. die Kamera um die Z-Achse verschwenkt, so dass die optische Achse X nicht mehrwie in Figur 1 dargestellt - rechtwinklig auf die ebene Seitenfläche des Gebäudes trifft - wird beim Auslösen der Kamera, d.h. beim Erzeugen der Bilddaten die seit dem Kalibrieren erfolgte Verschwenkbewegung der Kamera um die Z-Achse in den Speicher der Kamera bzw. diese Verschwenkbewegung repräsentierende Daten eingeschrieben. Diese Verschwenkbewegung wird beispielsweise auf Grund von Beschleunigungssensoren ermittelt.

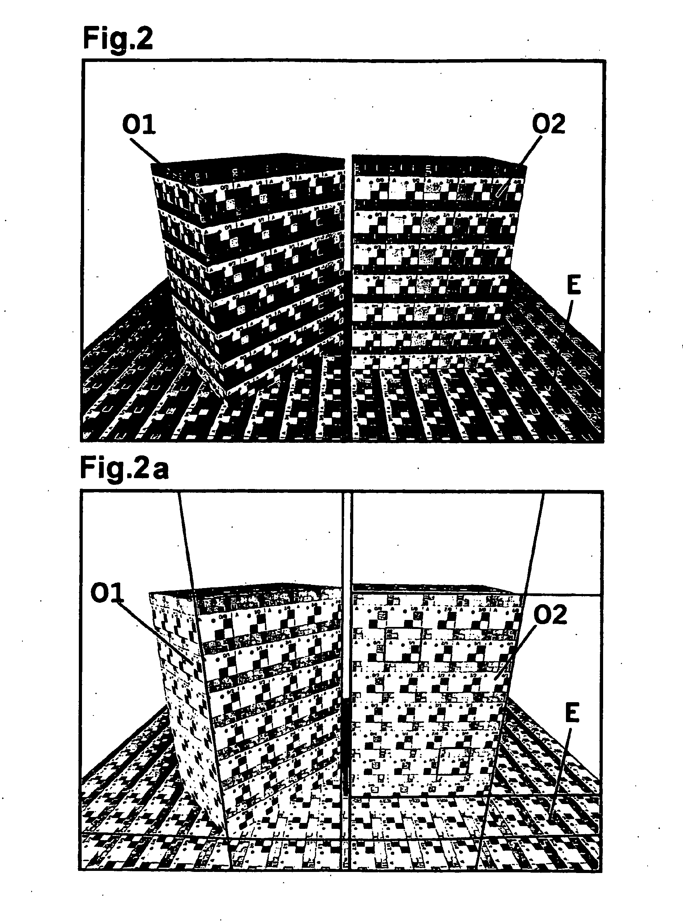

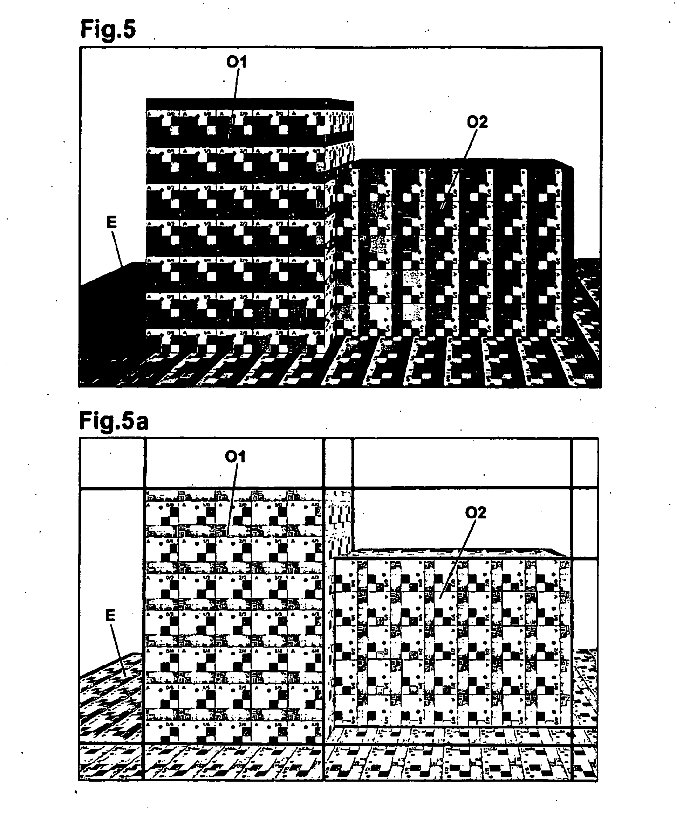

Ein Vergleich der Fig. 2/2a, 3/3a, 4/4a und 5/5a verdeutlicht die Wirkung der erfindungsgemäßen Vorrichtung und des hierin angewandten, für sich erfinderischen Verfahrens. Bei diesem Verfahren zur Korrektur von perspektivischen Verzerrungen in einem optischen System werden die Bilddaten, die ein durch das Linsensystem projiziertes Bild beschreiben, mit Korrekturdaten korrigiert und die so korrigierten Bilddaten zur Anzeige eines korrigierten Bildes ausgegeben. Mit der Erfindung wird hierbei die Winkellage des Linsensystems mit die Winkellage zum Zeitpunkt der Erzeugung der Bilddaten wiedergebenden Winkellagedaten erfasst, mit den so erfassten Winkellagedaten werden Winkellagekorrekturdaten ermittelt, mit denen die Bilddaten korrigiert werden, um anhand der so korrigierten Bilddaten ein umeine optische Verzerrung korrigiertes Bild ausgeben zu können.

Bei dem erfindungsgemäßen Verfahren werden die Winkellage des Linsensystems zum Zeitpunkt der Generierung der Bilddaten wiedergebenden Winkellagedaten zusammen mit den Bilddaten in eine gemeinsame Datei eingeschrieben. Die Datei wird an einen die Winkellagekorrekturdaten verwaltenden Server versandt, d.h. einen Zentralrechner, der üblicherweise auch auf die Datenbank mit den Winkellagekorrekturdaten zugreift. Dort werden die Bilddaten korrigiert und zur Anzeige eines korrigierten Bildes an den Versender der Bilddaten zurückgeleitet, vorzugsweise automatisiert. Damit schafft das erfindungsgemäße Verfahren in seiner bevorzugten Ausgestaltung die Möglichkeit, Bilddaten unterschiedlicher Versender an einem einzigen Server im Rahmen einer zentralen Dienstleistung zu korrigieren und automatisch an den Versender zurückzusenden.

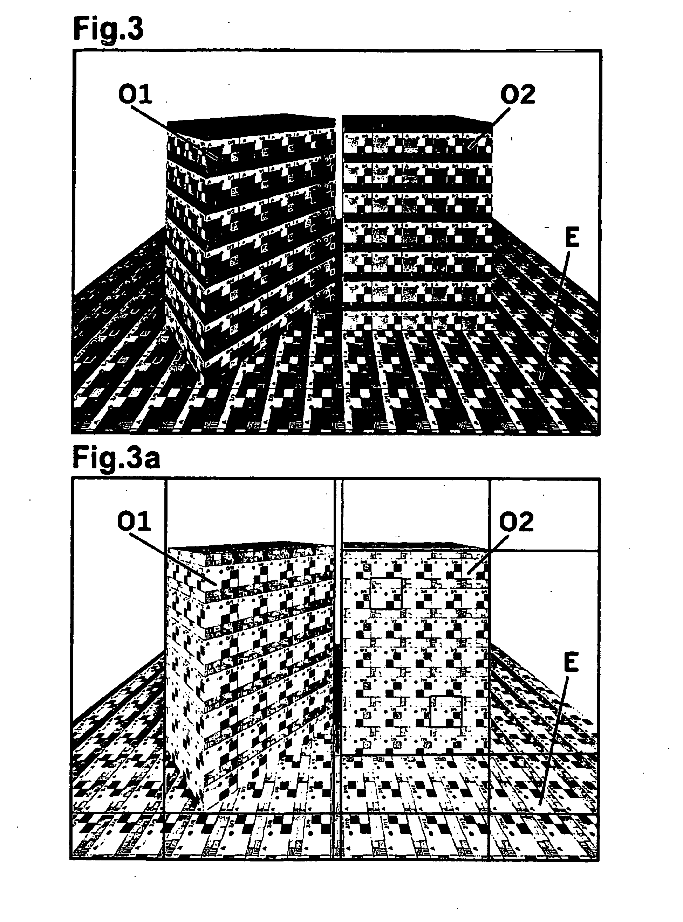

Die Fig. 2 und 3 verdeutlichen den Erfolg des erfindungsgemäßen Verfahrens. In Fig. 2 ergeben sich stürzende Linien und verfälschte Proportionen. Dem gegenüber sind tatsächlich rechtwinklig zueinander stehende Linien in dem mit korrigierten Bilddaten erzeugten Bild (Fig. 3) rechtwinklig zueinander dargestellt. Es ergibt sich eine proportionsgetreue Darstellung der beiden senkrecht auf einer Ebene E stehenden, versetzt zueinander angeordneten Objekte 01 und 02.

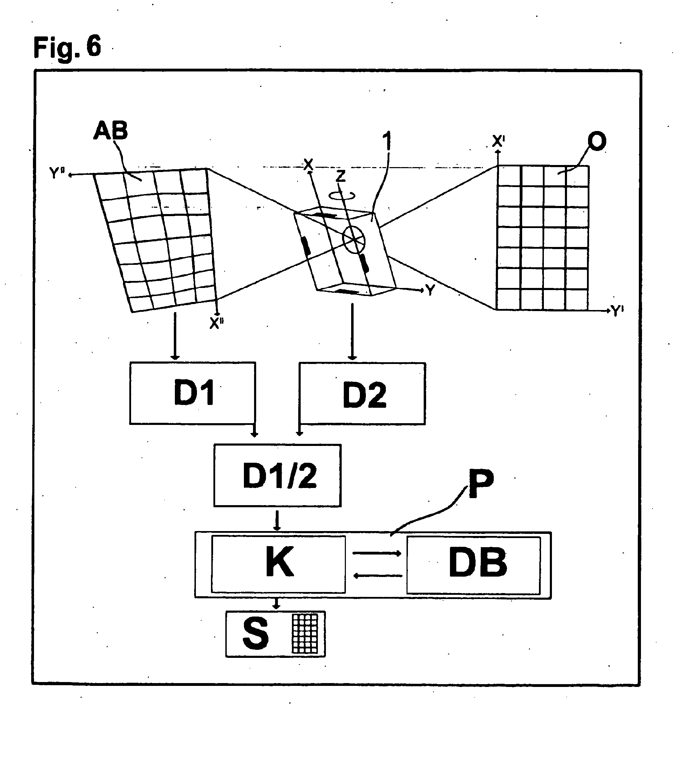

Die Figur 6 verdeutlicht den Ablauf zur Korrektur von Bilddaten eines Objektes 0, welches mit seinen realen Konturen rechts neben der schematisch gezeigten Kamera 1 dargestellt ist. Links der Kamera 1 befindet sich die Darstellung des Objektes O in der Abbildungsebene, d.h. dasjenige Abbild AB des Objektes O, welches nach Aufnahme durch eine schräg stehende Kamera auf der Bildebene hinterlegt ist und durch die Bilddaten verkörpert wird. Es zeigt sich, dass auf der Abbildungsebene die Konturen des Objektes 0 verzerrt sind. Im mittleren Teil des Abbildes AB sind Verzerrungen der orthogonalen Linien des Objektes A zu erkennen, die durch Objektivfehler verursacht werden.

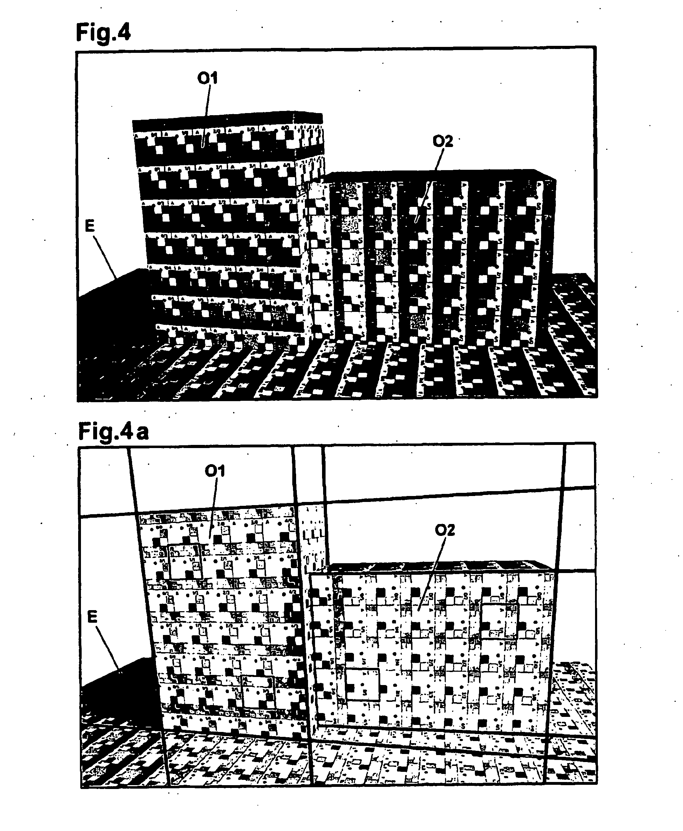

Die Bilddaten zu dem Abbild AB, d.h. diejenigen Daten, die durch den Sensor zur Erfassung der Bildinformationen abgespeichert werden, sind in einer Datei hinterlegt. Zusätzlich zu den Pixel-Informationen des Sensors enthält eine EXIF-Datei Informationen zu dem Aufnahmeformat sowie der Brennweite und der Blende des Aufnahmeobjektives bei der Aufnahme. Des weiteren sind Zeitinformationen zu dem Abbild hinterlegt, z.B. Aufnahmezeit. Ferner wird zu jedem Bild eine durchlaufende Nummer vergeben. Diese Datei ist in Figur 4 mit D1 gekennzeichnet. Des weiteren werden in einer Datei D2 Messdaten der Winkelsensoren eingeschrieben. Ferner wird auch in diese Datei D2 die Zeitinformation sowie die durchlaufende Nummerierung des entsprechenden Abbildes eingeschrieben. Zu jedem Abbild werden dementsprechend zeitgleich sowohl die Bilddaten in der Datei D1 als auch die Winkellagedaten in der Datei D2 sowie in beiden Dateien hinterlegt, die eine Synchronisierung der beiden Datensätze zu dem entsprechenden Abbild ermöglichen, wie beispielsweise die Zeitinformation oder die durchlaufende Nummerierung der einzelnen Abbilder.

Die Datensätze der beiden Dateien D1 und D2 zu einem Abbild werden synchronisiert, d.h. einander zugeordnet, sodass zu jedem Abbild des Objektes O die Bilddaten wie auch die Winkellagedaten einander zugeordnet vorliegen. Die dabei erzeugte Datei ist in Figur 6 mit D1/2 gekennzeichnet.

Die Datensätze aus der Datei D1/2 werden der Korrekturberechnung K zugeführt. Diese Korrektur erfolgt in einem Prozessor P, dem beispielsweise die Daten D1/2 über Datenleitung L zugeführt werden können. Der Prozessor P greift auf eine Datenbank DB zurück, die sowohl Winkellagekorrekturdaten zu einer Vielzahl von denkbaren Winkellagen des optischen Systems enthält als auch Korrekturdaten zu einzelnen Objektiven, d.h. "Profile" zu den optischen Fehlern der verwendeten Objektive. Die Datenbank kann sämtliche denkbaren, zumindest aber in der Profifotographie üblichen Objektive mit ihren Fehlern enthalten. Die entsprechenden Profile werden üblicherweise dadurch erstellt, dass der optische Fehler eines bestimmten Objektives durch Abgleich zwischen einer digitalisierten Vorlage mit dem durch das entsprechende Objektiv ermittelten Abbild der Vorlage ein Korrekturdatensatz erstellt wird. Dieser Datensatz kann sowohl die Distorsion des Objektivs wie auch die Vignetierung des Objektivs sowie andere Abbildungsschwächen berücksichtigen. Ein mögliches Verfahren zur Erstellung entsprechender Profile ist in der DE 101 26 546 beschrieben.

In dem Prozessor P wird zunächst auf Grund der in der Datei D1/2 eingeschriebenen Information zum verwendeten Objektiv aus der Datenbank DB das Profil zu dem entsprechenden Objektiv ausgelesen. Es erfolgt eine Korrektur der optischen Fehler des Linsensystems der Bilddaten der Datei D1/2. Diese um Linsenfehler korrigierten Daten werden danach perspektivisch korrigiert. Hierbei werden mit den in der Datei D1/2 enthaltenen Winkellagedaten aus der Datenbank DB passende Winkellagekorrekturdaten ausgelesen. Mit diesen Winkellagekorrekturdaten erfolgt eine Korrektur der optischen korrigierten Bilddaten. Das um Abbildungsschwächen des Linsensystems perspektivisch korrigierte Abbild wird in einen Speicher S als korrigiertes Bild KB eingeschrieben.

Mit dem erfindungsgemäßen Verfahren können beliebige optische Fehler zentral in dem Prozessor P korrigiert werden. Dieser kann von einem Betreiber für beliebig viele Fotografen bzw. Anwender, betrieben werden, die die Dateien D1/2 oder die Dateien D1 und D2 jeweils an den Betreiber versenden, der das korrigierte Bild KB als Dienstleistung erstellt und die das korrigierte Bild KB verkörpemden Informationen den einzelnen Anwendem zuleitet. Neben der Korrektur von Abbildungsschwächen des Linsensystems und der Korrektur von optischen Verzerrungen können auch horizontale Fehllagen korrigiert werden.

## Patentansprüche

1. Verfahren zur Korrektur perspektivischer Verzerrungen eines Linsensystems (1), bei dem Bilddaten, die ein durch das Linsensystem (1) projiziertes Bild (AB) beschreiben, mit Korrekturwerten korrigiert und die so korrigierten Bilddaten (KB) zur Anzeige eines korrigierten Bildes ausgegeben werden,
**dadurch gekennzeichnet,**
**dass** die Winkellage des Linsensystems (1) bei Erzeugen der Bilddaten wiedergebende Winkellagedaten erfasst, ein Satz von Winkellagekorrekturdaten, die zu den Winkellagedaten passen, aus einer Datenbank (DB) ausgelesen werden, in der eine Vielzahl von Datensätzen für unterschiedliche Winkellagen des Linsensystems (1) hinterlegt sind, und die Bilddaten mit den ermittelten Winkellagekorrekturdaten korrigiert werden.

2. Verfahren nach Anspruch 1, **dadurch gekennzeichnet, dass** der Satz passender Winkellagekorrekturdaten aufgrund von Winkellagedaten ausgewählt wird, die repräsentativ für die Drehung des Linsensystem (1) um dessen optische Achse (X) und repräsentativ für die Drehung des Linsensystems (1) um eine sich zu der optischen Achse (X) rechtwinklig, bei lotrechter Ausrichtung des Linsensystems (1) in der Horizontalen erstreckende Achse (Y) sind.

3. Verfahren nach Anspruch 1 oder 2, **dadurch gekennzeichnet, dass** der Satz passender Winkellagekorrekturdaten aufgrund von Winkellagedaten ausgewählt wird, die repräsentativ für die Drehung des Linsensystems (1) um eine vertikale Achse (Z) sind.

4. Verfahren nach Anspruch 3, **dadurch gekennzeichnet, dass** die Winkellagedaten **dadurch** erhalten werden, dass das Linsensystem (1) zunächst mit seiner optischen Achse (X) rechtwinklig zu einer ebenen Fläche eines abzubildenden Objektes (G) angeordnet wird und die beim Überführen des Linsensystems (1) von dieser Kalibrierposition in die beim Erzeugen der Bilddaten eingenommene Position des Linsensystems (1) erfolgte Drehung um die vertikale Achse durch wenigstens einen an dem Linsensystem (1) angebrachten Sensor ermittelt wird.

5. Verfahren nach Anspruch 4, **dadurch gekennzeichnet, dass** die Drehung des Linsensystems (1) um die vertikale Achse (Z) mit wenigstens einem Beschleunigungssensor ermittelt wird.

6. Verfahren nach einem der vorherigen Ansprüche, **dadurch gekennzeichnet, dass** die Winkellagekorrekturdaten aus einer Datenbank (DB) ausgelesen werden, in der denkbare Winkellagen des Linsensystems (1) um drei Achsen (X, Y, Z) eines kartesischen Koordinatensystems jeweils in Intervallen hinterlegt sind.

7. Verfahren nach einem der vorherigen Ansprüche, **dadurch gekennzeichnet, dass** die Winkellage des Linsensystems (1) zur Erzeugung der Bilddaten zusammen mit den Bilddaten in eine gemeinsame Datei (D1/2) eingeschrieben werden und dass die Datei (D1/2) an einem die Winkellagekorrektur verwaltenden Server (P) versandt, dort korrigiert und zur Anzeige eines korrigierten Bildes (KB) an den Versender zurückgeleitet werden.

8. Verfahren nach Anspruch 7, **dadurch gekennzeichnet, dass** nach erfolgter Übertragung der Winkellagedaten des Linsenssystems (1) und von dem optischen System zugeordneten EXIF-Daten an den Server von diesem die entsprechenden Bilddatenkorrekturen an den Versender übermittelt werden.

9. Verfahren nach einem der vorherigen Ansprüche, **dadurch gekennzeichnet, dass** der User (Anwender) individuell auf die Winkelkorrekturdaten zugreifen kann und nach gestalterischen Gesichtspunkten jede der drei Winkellangen X, Y und Z-Achsen manuell auf die Bilddaten anwenden und über Vorschauen mit geringer Auflösung die für ihn relevante Version in dem Prozessor (P) verarbeitet. Da die perspektivische Korrektur sowie die gestalterische Einflussnahme auf die Perspektive über die Abbildungsebene (AB) definiert ist, wird hier der Begriff einer "Virtuellen-Standarte" eingeführt.

## Claims

1. Method for the correction of perspective deformation in a lens system (1) in which image data, which describe an image (AB) projected through the lens system (1), are corrected with correction data and the image data (KB) corrected in this way are output for the display of a corrected image,
**characterised in that**,
the angular position of the lens system (1) on producing the image data acquires reproducing angular position data, a record of angular position correction data, which match the angular position data, are read out of a data base (DB), in which a large number of data records have been saved for different angular positions of the lens system (1), and the image data are corrected with the determined angular position correction data.

2. Method according to Claim 1, **characterised in that** the record of matching angular position correction data is selected based on angular position data which are representative of the rotation of the lens system (1) about its optical axis (X) and representative of the rotation of the lens system (1) about an axis (Y) extending at right angles to the optical axis (X) and extending horizontally with vertical alignment of the lens system (1).

3. Method according to Claim 1 or 2, **characterised in that** the record of matching angular position correction data is selected based on angular position data which are representative of the rotation of the lens system (1) about a vertical axis (Z).

4. Method according to Claim 3, **characterised in that** the angular position data are obtained **in that** the lens system (1) is initially arranged with its optical axis (X) at right angles to a planar surface of an object (G) to be imaged and the rotation about the vertical axis occurring during the transfer of the lens system (1) from this calibration position into the position taken up by the lens system (1) during the generation of the image data is determined by at least one sensor fitted to the lens system (1).

5. Method according to Claim 4, **characterised in that** the rotation of the lens system (1) about the vertical axis (Z) is determined with at least one acceleration sensor.

6. Method according to one of the aforementioned claims, **characterised in that** the angular position correction data are read out of a data base (DB) in which conceivable angular positions of the lens system (1) about the three axes (X, Y, Z) of a Cartesian co-ordinate system are in each case saved at intervals.

7. Method according to one of the aforementioned claims, **characterised in that** the angular position of the lens system (1) for the generation of the image data together with the image data are written into a common file (D1/2) and that the file (D1/2) is sent to a server (P) which manages the angular position correction where it is corrected and returned to the sender for the display of a corrected image (KB).

8. Method according to Claim 7, **characterised in that** after conclusion of the transfer of the angular position data of the lens system (1) and of EXIF data assigned by the optical system to the server, the corresponding image data corrections are transferred from the server to the sender.

9. Method according to one of the aforementioned claims, **characterised in that** the user can individually access the angular position correction data and apply each of the three angular positions of the X, Y and Z axes manually to the image data according to design viewpoints and process in the processor (P) the version relevant to the user via previews with slight resolution. Since the perspective correction and the designing influence on the perspective is defined via the imaging plane (AB), the term of a "virtual standard" is introduced here.

## Revendications

1. Procédé de correction de distorsions de perspective d'un système de lentilles (1), selon lequel on corrige des données d'image qui décrivent une image (AB) projetée par le système de lentilles (1) avec des valeurs correctrices et on délivre en sortie les données d'image ainsi corrigées (KB) pour l'affichage d'une image corrigée, **caractérisé en ce qu'**on acquiert des données de position angulaire reproduisant la position angulaire du système de lentilles (1) lors de la production des données d'image, **en ce qu'**on lit un ensemble de données correctrices de position angulaire qui sont adaptées aux données de position angulaire dans une base de données (DB) dans laquelle sont mémorisés plusieurs ensembles de données pour différentes positions angulaires du système de lentilles (1) et **en ce qu'**on corrige les données d'image avec les données correctrices de position angulaire déterminées.

2. Procédé selon la revendication 1, **caractérisé en ce qu'**on sélectionne l'ensemble de données correctrices de position angulaire adaptées sur la base de données de position angulaire qui sont représentatives de la rotation du système de lentilles (1) autour de son axe optique (X) et représentatives de la rotation du système de lentilles (1) autour d'un axe (Y) perpendiculaire à l'axe optique (X) et s'étendant à l'horizontale dans le cas d'une orientation verticale du système de lentilles (1).

3. Procédé selon la revendication 1 ou 2, **caractérisé en ce qu'**on sélectionne l'ensemble de données correctrices de position angulaire adaptées sur la base de données de position angulaire de données de position angulaire qui sont représentatives de la rotation du système de lentilles (1) autour d'un axe vertical (Z).

4. Procédé selon la revendication 3, **caractérisé en ce qu'**on obtient les données de position angulaire en agençant d'abord le système de lentilles (1) avec son axe optique (X) perpendiculaire à une surface plane d'un objet à représenter (G) et en déterminant la rotation effectuée autour de l'axe vertical lors du passage du système de lentilles (1) de cette position de calibrage à la position du système de lentilles (1) prise lors de la production des données d'image au moyen d'au moins un capteur placé sur le système de lentilles (1).

5. Procédé selon la revendication 4, **caractérisé en ce qu'**on détermine la rotation du système de lentilles (1) autour de l'axe vertical (Z) avec au moins un capteur d'accélération.

6. Procédé selon l'une des revendications précédentes, **caractérisé en ce qu'**on lit les données correctrices de position angulaire dans une base de données (DB) dans laquelle des positions angulaires envisageables du système de lentilles (1) autour de trois axes (X, Y, Z) d'un système de coordonnées cartésien sont enregistrées à chaque fois à certains intervalles.

7. Procédé selon l'une des revendications précédentes, **caractérisé en ce qu'**on enregistre la position angulaire du système de lentilles (1) pour la production des données d'image conjointement avec les données d'image dans un fichier commun (D1/2) et **en ce qu'**on envoie le fichier (D1/2) à un serveur (P) gérant la correction de position angulaire, on le corrige là et on le renvoie à l'expéditeur en vue de l'affichage d'une image corrigée (KB).

8. Procédé selon la revendication 7, **caractérisé en ce que**, une fois effectuée la transmission des données de position angulaire du système de lentilles (1) et de données EXIF associées au système optique jusqu'au serveur, ce dernier transmet les corrections de données d'image correspondantes à l'expéditeur.

9. Procédé selon l'une des revendications précédentes, **caractérisé en ce que** l'utilisateur (User) peut accéder individuellement aux données correctrices de position angulaire, **en ce qu'**il peut appliquer selon des points de vue créateurs chacun des trois axes X, Y et Z de position angulaire manuellement sur les données d'image et **en ce que**, par l'intermédiaire d'un aperçu avec une résolution réduite, il traite dans le processeur (P) la version qui l'intéresse. Comme la correction de perspective ainsi que l'influence créatrice sur la perspective sont définies par l'intermédiaire du plan de représentation (AB), on introduit ici le concept d'un « porte-objectif virtuel ».
